# EUROPÄISCHE PATENTSCHRIFT

(11) **EP 1 565 255 B1**
(45) Veröffentlichungstag und Bekanntmachung des Hinweises auf die Patenterteilung: **26.11.2008**
(21) Anmeldenummer: 03769421.3
(22) Anmeldetag: 20.10.2003
(51) Int. Cl.: B01D 69/10, B05B 13/06, B29C 65/02

(54) **VERFAHREN ZUR KONTINUIERLICHEN HERSTELLUNG VON TUBULAREN VERBUNDMEMBRANEN**
METHOD FOR THE CONTINUOUS PRODUCTION OF TUBULAR COMPOSITE MEMBRANES
PROCEDE DE PRODUCTION CONTINUE DE MEMBRANES TUBULAIRES COMPOSITES

(30) Priorität: 18.10.2002 DE 10248750
(43) Veröffentlichungstag der Anmeldung: 24.08.2005
(73) Patentinhaber: Sulzer Chemtech GmbH, 61239 Ober-Mörlen-Ziegenberg (DE)
(72) Erfinder: BRÜSCHKE, Hartmut, Ernst, Arthur, 69226 Nussloch (DE); SCHÄFER, Wolfgang, 66424 Homburg (DE); WYNN, Nicholas, Patrick, Redwood City, CA 94062 (US); MARGGRAFF, Frank-Klaus, 66424 Homburg (DE)
(74) Vertreter: Bublak, Wolfgang
(86) Internationale Anmeldenummer: PCT/EP2003/011586
(87) Internationale Veröffentlichungsnummer: WO 2004/035183

(56) Entgegenhaltungen:
- EP-A- 0 059 546
- EP-A- 1 338 328
- WO-A-02/06578
- WO-A-97/20684
- CH-A- 548 273
- FR-A- 1 333 422
- GB-A- 1 604 641
- US-A- 3 294 617
- US-A- 5 582 949
- PATENT ABSTRACTS OF JAPAN Bd. 0030, Nr. 32 (C-040), 17. März 1979 (1979-03-17) -& JP 54 009168 A (DAICEL CHEM IND LTD), 23. Januar 1979 (1979-01-23)
- PATENT ABSTRACTS OF JAPAN Bd. 0051, Nr. 44 (C-071), 11. September 1981 (1981-09-11) -& JP 56 076206 A (SEKISUI CHEM CO LTD; others: 01), 23. Juni 1981 (1981-06-23)
- PATENT ABSTRACTS OF JAPAN Bd. 0031, Nr. 57 (C-068), 22. Dezember 1979 (1979-12-22) -& JP 54 131577 A (NITTO ELECTRIC IND CO LTD), 12. Oktober 1979 (1979-10-12)
- PATENT ABSTRACTS OF JAPAN Bd. 0081, Nr. 60 (M-312), 25. Juli 1984 (1984-07-25) -& JP 59 055716 A (TAKEUCHI PRESS KOGYO KK), 30. März 1984 (1984-03-30)
- PATENT ABSTRACTS OF JAPAN Bd. 1997, Nr. 04, 30. April 1997 (1997-04-30) & JP 08 324600 A (DAINIPPON PRINTING CO LTD), 10. Dezember 1996 (1996-12-10)
- DATABASE WPI Section Ch, Week 197949 Derwent Publications Ltd., London, GB; Class A88, AN 1979-88443B XP002270868 -& JP 54 138873 A (YUASA BATTERY CO LTD) 27. Oktober 1979 (1979-10-27)
- PATENT ABSTRACTS OF JAPAN Bd. 0110, Nr. 94 (M-574), 25. März 1987 (1987-03-25) -& JP 61 244529 A (YOSHIKAWA KOGYO KK), 30. Oktober 1986 (1986-10-30)
- PATENT ABSTRACTS OF JAPAN Bd. 0021, Nr. 28 (M-037), 26. Oktober 1978 (1978-10-26) -& JP 53 095373 A (YUASA BATTERY CO LTD), 21. August 1978 (1978-08-21)

## Beschreibung

Die Erfindung betrifft ein Verfahren zur kontinuierlichen Herstellung von schlauch- oder rohrförmigen Komposit- oder Verbundmembranen, nachfolgend als Schlauchmembranen bezeichnet.

In den Membrantrennanlagen werden die Schlauchmembranen in zweckmäßiger Anordnung zu Modulen zusammengefasst. Allgemein bekannte Formen dieser Module sind der Hohlfasermodul, der Kapillarmodul und der Tubularmodul. Die Durchmesser der einzelnen Membranschläuche sind unterschiedlich. Sie liegen beim Hohlfasermodul im Bereich von 30 bis 100 µm, beim Kapillarmodul im Bereich von 0,2 bis 3 mm und beim Tubularmodul im Bereich von 4-50 mm. Der transmembrane Fluss ist bei Hohlfasern von außen nach innen gerichtet, in Kapillarmembranen kann er sowohl von innen nach außen als auch von außen nach innen erfolgen, und bei Tubularmembranen ist er im allgemeinen von innen nach außen gerichtet.

Diskontinuierlich lassen sich Tubularmembranen nach dem Kegelziehverfahren fertigen. Dabei wird in ein absenkbares Rohr ein Kegel gegeben, über dem sich die Gießlösung befindet. Während des Absenkens tritt die Gießlösung durch den Ringspalt und formt auf dem Rohr einen Film der nach den üblichen Membranbildungsschritten verfestigt wird. Die fertige Membran wird dem Rohr entnommen und durch Umwickeln mit geeigneten (porösen) Drainagematerialien gestützt. Praktikabler ist das Aufbringen der Gießlösung auf dem fertigen Drainage-und Stützrohr. Hierbei wird entweder das Rohr kurze Zeit mit der Polymerlösung gefüllt und dann wieder entleert (die anhaftende Schicht bildet die spätere Membran), oder die Gießlösung wird aus dem Rohr von einer Gasblase verdrängt (hy drocasting). Die Stützrohre müssen die notwendigen Folgeschritte ohne Änderung überstehen.

Zur kontinuierlichen Herstellung von Tubularmembranen mit innen liegender aktiver Schicht wird die Gießlösung aus einer Ringdüse auf einen Träger aufgebracht. Dieser kann gemäß US-A-3 601 159 aus einzelnen Lagen durch Wickeln um einen Dorn hergestellt werden. Am Ende des Doms befindet sich die Düse. Eine andere Möglichkeit besteht im Umformen des Trägerbandes zu einem Schlauch, dessen Überlappungsstelle anschließend verschweißt oder verklebt wird.

Kapillarmembranen werden auch mit einer Doppelringdüse hergestellt, bei der durch die innere Düse das Fällmittel zugegeben wird. Die Kapillaren werden in einem Druckbehälter an den Enden verklebt. Wesentlich ist dabei die Ausbildung einer riss- und spannungsfreien Dichtung; außerdem dürfen die Öffnungen der Kapillaren beim bündigen Abtrennen nicht verkleben. Die Herstellung von Hohlfasern ähnelt dem Spinnen textiler Hohlfasern. Sie lassen sich durch Naßspinnen, Trockenspinnen und Schmelzspinnen formen. Das Zentrum der Spinndüsen bilden Hohlnadeln, durch die Inertgas in die Faser eingedüst wird, um ihr Kollabieren zu vermeiden. Während oder nach dem Spinnvorgang werden die Fasern ggf. bis zum gewünschten Durchmesser gereckt. Sehr feine Hohlfasern werden von außen angeströmt, bei Typen mit größeren Durchmessern fließt die Rohlösung auch durch die Hohlfaser. Dementsprechend tragen die Hohlfasern die asymmetrische Schicht außen oder innen.

Je nach den Bedingungen der Herstellung ist die für den späteren Trennvorgang maßgebliche aktive Schicht der Schlauchmembranen durchgehend porös mit symmetrischer oder asymmetrischer Porenstruktur. In besonderen Fällen kann auf einer asymmetrischen Porenstruktur auch eine dichte, im wesentlichen porenfreie Struktur ausgebildet sein.

Gemeinsam ist den vorgenannten Membranen, dass sie, abgesehen von einer ggf. vorhandenen zusätzlichen Trägerschicht, aus nur einem einheitlichen Stoff, z.B. anorganisches Material oder Polymermaterial, bestehen; sie werden daher auch als integrale Membranen bezeichnet. Auf diese Trägerschicht, bei der es sich z.B. um ein Vlies oder ein Gewebe handelt, ist die integrale Membran aufgebracht, wobei die Trägerschicht eine weitere Verbesserung der mechanischen Festigkeit und eine bessere Handhabbarkeit der Membran bedingen soll. Die Trägerschicht weist relativ große Öffnungen auf, die einen ungehinderten Fluss ermöglichen. Ebenso wie die anderen Schichten der Membran ist die Trägerschicht vorzugsweise temperatur- und chemikalienbeständig.

Die Herstellung von Tubularmembranen mit einer integralen Membran, die sich auf einer Trägerschicht befindet, kann so erfolgen, dass aus schmalen Streifen der Trägerschicht durch spiralförmiges Wickeln um einen Dom ein Schlauch geformt wird, worauf die Stoß- oder Überlappungskanten des Schlauches mittels Hitze oder Ultraschall verschweißt werden. In einem nachfolgenden Arbeitsgang werden die Trägerschläuche z.B. mit einer Polymerlösung beschichtet. Die Aufbringung der Polymerlösung erfolgt hierbei vorzugsweise auf der Innenseite der Schläuche, da diese bei einem von außen angelegten Druck leicht kollabieren. Hierzu befindet sich am Ende des Wickeldorns eine Öffnung, aus der die Polymerlösung auf die Innenseite des Schlauches aufgetragen wird. Durch Eintauchen in ein Fällbad erfolgt dann die Ausbildung der Membranschicht. Zunächst wird also aus der Trägerschicht der Schlauch geformt, der anschließend flächendekkend von innen beschichtet wird. Durch unvollkommene Verschweißung des Trägerschlauches entstandene Fehlstellen sollen durch die Polymerbeschichtung überdeckt und abgedichtet werden.

Nach dem beschriebenen kontinuierlichen Verfahren können nur einschichtige bzw. integrale Tubularmembranen hergestellt werden, da nach erfolgter Beschichtung der Trägerschicht mit der Polymerlösung und Ausbildung der Membranschicht eine weitere Beschichtung nur noch diskontinuierlich an einzelnen Schlauchstücken erfolgen kann, was technisch nachteilig und außerdem unwirtschaftlich ist. Die beschriebenen integralen Tubularmembranen werden vor allem für die Verfahren der Mikro-, Ultra- und Nanofiltration verwendet.

Für die Verfahren der Umgekehrten Osmose, Pervaporation bzw. Dampfpermeation und Gastrennung werden bevorzugt mehrschichtige Membranen eingesetzt, die aus mindestens zwei Schichten unterschiedlicher chemischer Zusammensetzung bestehen. Eine ggf. vorhandene zusätzliche Trägerschicht bleibt hierbei außer Betracht. Im allgemeinen besitzen derartige Komposit- oder Verbundmembranen eine poröse Unterschicht, die im wesentlichen die mechanische Beständigkeit der Membran bedingt (Stützschicht), und eine hierauf befindliche Schicht aus einem Material unterschiedlicher chemischer Beschaffenheit, die im wesentlichen die Trenneigenschaften der Membran bestimmt (Trennschicht) und bei der es sich entweder um eine mikroporöse oder um eine dichte, porenfreie Schicht handelt. Bei der Verwendung zur Umgekehrten Osmose handelt es sich bei der Trennschicht im allgemeinen um eine mikroporöse Schicht, wobei die Porengröße im Bereich von 10-1000 Å liegt. Bei der Verwendung zur Pervaporation bzw. Dampfpermeation sowie zur Gastrennung weist die Trennschicht zwar noch eine gewissen Anzahl von Poren im Bereich von etwa 10 Å oder darunter auf, sie wird aber gleichwohl als dichte oder porenfreie Schicht bezeichnet. Technologisch erfolgt die Abgrenzung der dichten oder porenfreien Trennschicht von de mikroporösen Trennschichten dadurch, dass erstere nach dem Lösungsdiffusionsprinzip trennen. Beispiele für geeignete dichte Trennschichten sind in der EP-B-0 096 339 beschrieben, z.B. solche aus Polyvinylalkohol oder PolyvinylalkoholCopolymeren. Hierbei wird mittels einer wässrigen Lösung des Polymere, die zusätzlich ein Vernetzungsmittel für Polyvinylalkohol enthält, eine dünne Schicht auf der Stützschicht hergestellt, die einer Trocknung/Wärmebehandlung unter Vernetzung des Polyvinylalkohols unterworfen wird. Weitere geeignete Kompositmembranen aus anderen Polymeren zur Anwendung in den genannten Verfahren sind dem Fachmann bekannt.

Das Dokument PATENT ABSTRACTS OF JAPAN Bd. 0031, Nr. 57 (C-068) & JP 54 131577 A, beschreibt die Herstellung von tubularen Kompositmembranen mit einer porösen Stützschicht und einer Trennschicht durch Umformen einer entsprechenden Flachmembran zu einem Schlauch und Verschweissen.

Im Prinzip lassen sich auch aus Komposit-Flachmembranen in der beschriebenen Weise Tubularmembranen herstellen. Die Schweiß- oder Klebenähte der so hergestellten Tubularmembranen weisen jedoch Undichtigkeiten bzw. Fehlstellen auf, da es nicht möglich ist, die mindestens zwei Schichten aus unterschiedlichen Materialien (Trennschicht, Stützschicht und ggf. Trägerschicht) gleichmäßig und dicht zu verschweißen. Hieraus ergibt sich unmittelbar die Aufgabe der Erfindung.

Gelöst wird diese Aufgabe durch ein Verfahren zur kontinuierlichen Herstellung von tubularen Komposit- oder Verbundmembranen mit einer porösen Unterstruktur (Stützschicht), die im wesentlichen die mechanische Beständigkeit der Membran bedingt, und einer hierauf befindlichen Schicht aus einem Material unterschiedlicher chemischer Beschaffenheit, die im wesentlichen die Trenneigenschaften der Membran bedingt (Trennschicht), das dadurch gekennzeichnet ist, dass man eine entsprechende Flachmembran in Längsrichtung oder spiralig, mit der Trennschicht nach innen gewandt, zu einem Schlauch umformt und diesen auf Stoß oder überlappend verschweißt oder verklebt, dann von innen auf die Stoßnaht bzw. den inneren Überlappungsbereicht einen Streifen eines verfestigbaren Dichtungsmaterials aufbringt und schließlich das Dichtungsmaterial verfestigt.

Stützschicht und Trennschicht bestehen aus Material unterschiedlicher chemischer Beschaffenheit. Derartige Kompositmembranen, die als Flachmembranen zur Trennung von durch Destillation schwer zu trennenden Flüssigkeitsgemischen nach dem Verfahren der Pervaporation bzw. Dampfpermeation oder zur Gastrennung Verwendung finden, sind z.B. aus der EP-B- 0 096 339 bekannt. Vorzugsweise werden als Ausgangsmaterial für die Durchführung des Verfahrens der Erfindung Komposit-Flachmembranen eingesetzt, die zusätzlich eine Trägerschicht aus Vlies oder Gewebe aufweisen.

Die Tubularmembranen besitzen Durchmesser im Bereich von 4-50 mm und vorzugsweise 8-30 mm, wobei sich für die Praxis Durchmesser von 12-25 mm als vorteilhaft erwiesen haben.

Die Umformung der Flachmembran zur Tubularmembran erfolgt vorzugsweise durch spiraliges Wickeln über einen Dom oder ein Rohr, wobei die Wicklung überlappend oder auf Stoß erfolgen kann. Hierbei ist die Anordnung so, dass in der fertigen Tubularmembran die Trennschicht innen liegt. Im Fall der bevorzugten Ausführungsform mit Trägerschicht ist dann die Reihenfolge der Schichten in der fertigen Tubularmembran von innen nach außen: Trennschicht-Stützschicht-Trägerschicht. Die Verschweißung erfolgt z.B. durch Ultraschall oder Wärme. Hierbei wird bei einer Arbeitsweise auf Stoß ein Streifen eines Materials, das sich mit dem Material des kontaktierten Membranmaterials gut verschweißen oder verkleben lässt, über die Stoßnaht gelegt und an beiden Rändern mit dem kontaktierten Membranmaterial verschweißt oder verklebt. Bei der bevorzugten Ausführungsform mit einer Trägerschicht, z.B. aus Gewebe oder Vlies, besteht dieser Materialstreifen vorzugsweise aus dem gleichen Stoff wie die Trägerschicht. Es ist dabei unerheblich, ob sich dadurch die anderen Schichten der Membran gut und dicht verschweißen oder verkleben lassen, da eventuelle Fehlstellen durch die nachfolgende Aufbringung und Verfestigung des Dichtungsmaterials behoben werden. Die Breite des Materialstreifens wird hierbei so gewählt, dass eine permanente Fixierung der Stoßnaht gewährleistet ist, also z.B. 2-10 mm, z.B. 2-4 mm.

Anschließend wird von innen auf die Stoßnaht bzw. den inneren Überlappungsbereich ein Streifen eines verfestigbaren Dichtungsmaterials aufgebracht mit nachfolgender Verfestigung des Dichtungsmaterials. Das Dichtungsmaterial, vorzugsweise ein Polymeres, wird so ausgewählt, dass es gut auf der Trennschicht haftet und eine vergleichbar gute chemische und thermische Beständigkeit aufweist. Vorzugsweise wird als Dichtungsmaterial deshalb das gleiche Polymer verwendet aus dem auch die Trennschicht der Membran besteht. Diese Polymerbeschichtung kann dann in gleicher Weise nachbehandelt bzw. vernetzt werden wie die Trennschicht bei der Herstellung der Ausgangs-Flachmembran. Beispiele für geeignete Polymere sind Polyvinylalkohol, gelöst in Wasser, für Polyvinylalkohol-Trennschichten; Polyurethan, gelöst in Ketonen oder Estern, oder Polyurethan-Prepolymere, für Polyurethan-Trennschichten; sowie Silikone, gelöst in Ketonen, für Silikon-Trennschichten.

Die Aufbringung des Dichtungsmaterials von innen auf die Stoßnaht bzw. auf den inneren Überlappungsbereich erfolgt z.B. über eine Düse mit entsprechender Vorschubsteuerung der Tubularmembran. Hierbei wird der Materialauftrag des Dichtungsmaterials so gesteuert, dass von innen die Stoßnaht bzw. der innere Überlappungsbereich abgedeckt ist und abgedichtet wird, z.B. in einer Breite von 1 oder 2 mm oder auch breiter. Vorzugsweise befindet sich die Düse zur Aufbringung des Dichtungsmaterials an dem Dom, über den die Tubularmembran geformt und verschweißt bzw. verklebt wird, so dass die Bildung der Tubularmembran, das Verschweißen bzw. Verkleben, sowie das Aufbringen des Dichtungsmaterials auf die Stoßnaht bzw. die innere Überlappung in einem Arbeitsgang erfolgen können.

Zur Erhöhung der mechanischen Festigkeit kann die Tubularmembran, zusätzlich zur Trägerschicht, in an sich bekannter Weise, mit weiteren porösen Drainageschichten versehen werden.

Nach dem Verfahren der Erfindung lassen sich aus Komposit-Flachmembranen Tubularmembranen herstellen, die die Selektivität der entsprechenden Flachmembranen erreichen und defektfrei sind.

## Patentansprüche

1. Verfahren zur kontinuierlichen Herstellung von tubularen Komposit- oder Verbundmembranen mit einer porösen Unterstruktur, auch Stützschicht, die im wesentlichen die mechanische Beständigkeit der Membran bedingt, und einer hierauf befindlichen Schicht aus einem Material unterschiedlicher chemischer Beschaffenheit, die im wesentlichen die Trenneigenschaften der Membran bedingt, auch Trennschicht, **dadurch gekennzeichnet, dass** man eine entsprechende Komposit-Flachmembran in Längsrichtung oder spiralig, mit der Trennschicht nach innen gewandt, zu einem Schlauch umformt und diesen auf Stoß oder überlappend verschweißt oder verklebt, dann von innen auf die Stoßnaht bzw. den inneren Überlappungsbereich einen Streifen eines verfestigbaren Dichtungsmaterials aufbringt und schließlich das Dichtungsmaterial verfestigt.

2. Verfahren nach Anspruch 1, **dadurch gekennzeichnet, dass** man von einer Kompositmembran ausgeht, die zusätzlich eine Trägerschicht aus einem Vlies oder Gewebe aufweist.

3. Verfahren nach Anspruch 1 oder 2, **dadurch gekennzeichnet, dass** man die Umformung der Komposit-Flachmembran zur Schlauchmembran durch spiralförmiges Wickeln eines Flachmembranbandes um einen Dom oder ein Rohr durchführt.

4. Verfahren nach einem der vorhergehenden Ansprüche, **dadurch gekennzeichnet, dass** man als Dichtungsmaterial das gleiche Polymer verwendet, aus dem die Trennschicht der Membran besteht.

5. Verfahren nach einem der vorhergehenden Ansprüche, **dadurch gekennzeichnet, dass** man das Dichtungsmaterial mittels einer Düse aufbringt.

6. Verfahren nach Anspruch 3 und 5, **dadurch gekennzeichnet, dass** man mit einer Düse arbeitet, die sich an dem Dorn befindet, über den die Umformung der Flachmembran zum Schlauch stattfindet, und die Umformung, das Verschweißen bzw. Verkleben, sowie das Aufbringen des Dichtungsmaterials auf die Stoßnaht bzw. die innere Überlappung in einem Arbeitsgang durchführt.

7. Verfahren nach einem der vorhergehenden Ansprüche, **dadurch gekennzeichnet, dass** man die Tubularmembran zur Erhöhung der mechanischen Festigkeit, zusätzlich zur Trägerschicht, mit weiteren porösen Drainageschichten versieht.

## Claims

1. A process for the continuous production of tubular composite membranes comprising a porous substructure, also support layer, mainly determining the mechanical strength of the membrane, and being on that porous substructure a layer of a material of different chemical nature, said layer, also separating layer, mainly determining the separation properties of the membrane, **characterized in that**, a respective flat sheet composite membrane is wound lengthwise or spirally into a tubular form, the separating layer of said membrane facing to the inside, and welding or gluing that either overlapping or by butt welding, followed by applying on the inside of said butt weld or overlapping area a strip of a sealing material which can be solidified, and finally solidifying said sealing material.

2. The process according to claim 1, **characterized in that** the starting composite membrane comprises an additional carrier layer made from woven or nonwoven fabric.

3. The process according to claim 1 or 2, **characterized by** performing the formation of the flat sheet composite membrane to the tube membrane by winding a flat sheet membrane tape spirally around a mandrel or a tube.

4. The process according to one of the aforesaid claims, **characterized by** using as the sealing material the same polymer from which the separating layer of the membrane is made.

5. The process according to one of the aforesaid claims, **characterized by** applying the sealing material by means of a nozzle.

6. The process according to claims 3 and 5, **characterized by** using a nozzle being located on said mandrel around which said flat sheet membrane is formed into the tube, and performing the processes of formation, gluing or welding and applying the sealing material on the butt weld or overlapping area in one step.

7. The process according to one of the aforesaid claims, **characterized by** applying to said tubular membrane, in addition to the carrier layer, further porous drainage layers for increasing the mechanical strength.

## Revendications

1. Procédé de fabrication continue de membranes composites tubulaires ayant une sous-structure poreuse, appelée aussi couche de soutènement, qui pour l'essentiel conditionne la résistance mécanique de la membrane, et comportant une couche, disposée par-dessus, en un matériau ayant des propriétés chimiques différentes, qui pour l'essentiel conditionne les propriétés de séparation de la membrane, appelée aussi couche de séparation, **caractérisé en ce qu'**on déforme pour obtenir un tube une membrane composite plane correspondante, dans la direction longitudinale ou en spirale, la couche de séparation étant dirigée vers l'intérieur, et on la soude ou on la colle, bout à bout ou en chevauchement, puis, à partir de l'intérieur, on applique sur la soudure bout à bout ou sur la plage de chevauchement interne, une bande en un matériau d'étanchéité pouvant être durci, puis finalement on durcit le matériau d'étanchéité.

2. Procédé selon la revendication 1, **caractérisé en ce qu'**on part d'une membrane composite, qui en outre comprend une couche support, constituée d'un voile non tissé ou d'un tissu.

3. Procédé selon la revendication 1 ou 2, **caractérisé en ce qu'**on met en oeuvre la déformation de la membrane plane composite en la membrane tubulaire par enroulement en spirale d'une bande en une membrane plane, autour d'un mandrin ou d'un tube.

4. Procédé selon l'une des revendications précédentes, **caractérisé en ce qu'**on utilise en tant que matériau d'étanchéité le même polymère que celui dont est constituée la couche de séparation de la membrane.

5. Procédé selon l'une des revendications précédentes, **caractérisé en ce qu'**on applique le matériau d'étanchéité à partir d'une buse.

6. Procédé selon les revendications 3 et 5, **caractérisé en ce qu'**on travaille avec une buse se trouvant sur le mandrin sur lequel a lieu la déformation de la membrane plane en un tube, et on met en oeuvre la déformation, le soudage ou le collage, ainsi que l'application du matériau d'étanchéité sur la soudure bout à bout ou sur le chevauchement interne, en une seule passe.

7. Procédé selon l'une des revendications précédentes, **caractérisé en ce qu'**on pourvoit la membrane tubulaire, pour augmenter sa résistance mécanique, non seulement de la couche support, mais aussi de couches de drainage poreuses supplémentaires.
